# EUROPEAN PATENT APPLICATION

(11) **EP 1 619 835 A1**
(43) Date of publication of application: **25.01.2006**
(21) Application number: 04257221.4
(22) Date of filing: 22.11.2004
(51) Int. Cl.: H04L 12/56

(54) **A Crossbar comprising input queue groups and a distribution processor**

(30) Priority: 22.07.2004 JP 2004214786
(71) Applicant: FUJITSU LIMITED, Kawasaki-shi, Kanagawa 211-8588 (JP)
(72) Inventor: Osano, Hidekazu, Fujitsu Limited, Kawasaki-shi, Kanagawa 211-8588 (JP); Suzuki, Nobuyuki, Fujitsu Limited, Kawasaki-shi, Kanagawa 211-8588 (JP); Nakamura, Shu, Fujitsu Limited, Kawasaki-shi, Kanagawa 211-8588 (JP); Arai, Hideto, Fujitsu Limited, Kawasaki-shi, Kanagawa 211-8588 (JP)
(74) Representative: Mohun, Stephen John

(57) **Abstract**

A crossbar (100) includes input queue groups (10,20,30,40) and a distribution processor (110). The input queue groups (10,20,30,40) include multi-step input queues (10a-40a,10b-40b) of data packets whose data transmission destinations are "address W" and "address Y" or "address X" and "address Z" and are provided respectively at input ports A and B and input ports C and D. The distribution processor (110) distributes the data packet input into the input port to input queue group (10,20,30,40) according to the data transmission destinations (that is, "address W", "address Y", "address X", and "address Z") of the input data.

## Description

### BACKGROUND OF THE INVENTION

### 1) Field of the Invention

The present invention relates to a crossbar having a plurality of input ports and output ports.

### 2) Description of the Related Art

The performance required for the information processing devices such as personal computers is increasing with each passing year. Some of the common approaches for meeting the demand for improved performance are connecting a plurality of computers via a network to form a cluster configuration, employing a symmetric multiprocessor (SMP) configuration to increase the number of central processing units (CPU) of one computer, etc.

Thus, when realizing a high-performance information processing device, crossbars are used as internal communication systems to accelerate the transmission speed between CPUs and memories. A typical crossbar dynamically selects an input port (for instance, a port connected to nodes such as a CPU, etc.) and an output port (for instance, a port connected to the nodes such as a memory module, etc.), connects the selected input port and the output port to form a data transmission channel, and performs data transmission between the nodes. A related technology has been disclosed in Japanese Patent Laid-Open Publication No. 2002-55965.

In a crossbar, an input end (transmitting end) and an output end (receiving end) of the data can be directly connected in one to one. This helps prevent data collision, data crossing, etc., thereby improving the transmission speed of the data. A crossbar system is employed in switchboards of telephone exchange stations before the spread of the digital switchboard.

However, in the conventional crossbar, if the destination of the first data packet is busy, the subsequent data packets (second data packet onwards) are queued even though their destinations are not busy. This leads to a throughput drop.

### SUMMARY OF THE INVENTION

It is an object of the present invention to at least solve the problems in the conventional technology.

A crossbar according to an aspect of the present invention includes a plurality of input ports and output ports. The crossbar further includes a plurality of input queue groups, each input queue group is provided corresponding to each input port, each input queue group having an input queue corresponding to each output port, the output port being a data transmission destination; and a distribution processing unit that distributes input data input into the input port to the input queue group according to the data transmission destination of the input data.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a block diagram of a computer system that includes a crossbar according to an embodiment of the present invention;
Fig. 2 is a schematic diagram of a modification of the crossbar;
Fig. 3 is a schematic diagram of another modification of the crossbar;
Fig. 4 is an example of results obtained through simulation of throughput;
Fig. 5 is an example of results obtained through simulation of busy rate;
Fig. 6 is a block diagram of a computer system with fewer steps of a FIFO buffer of an input queue; and
Fig. 7 is a block diagram of a computer system that includes a conventional crossbar.

### DETAILED DESCRIPTION

Exemplary embodiments of a crossbar according to the present invention are explained next with reference to the accompanying drawings. Various modifications are explained as other embodiments following the explanation of the crossbar according to the present invention.

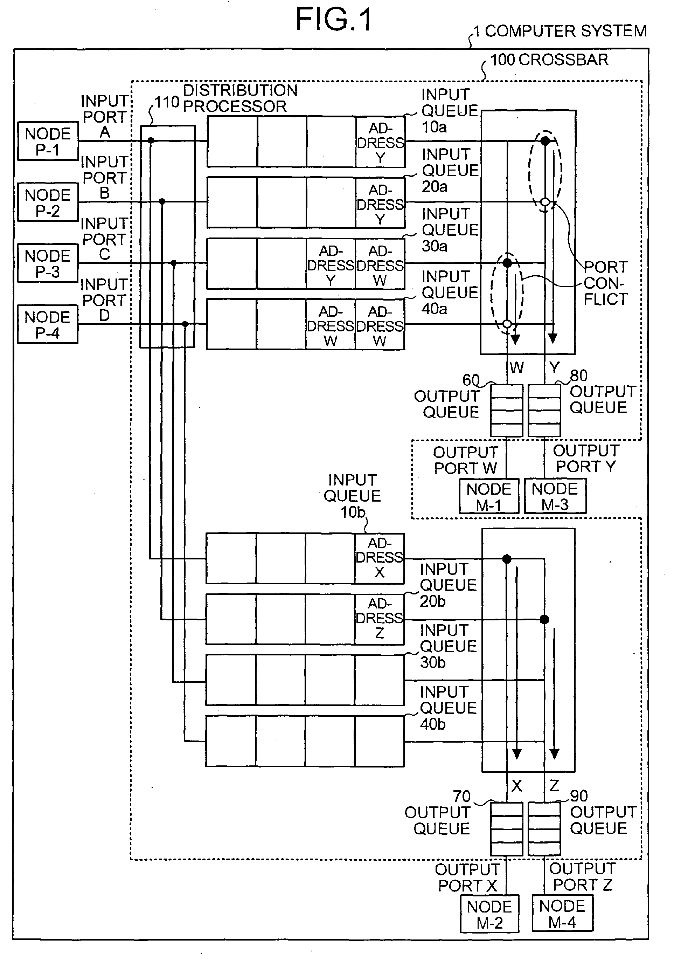

Fig 1 is a block diagram of a computer system 1 that includes a crossbar 100 according to an embodiment of the present invention. In the computer system 1, nodes P-1 to P-4 are connected to nodes M-1 to M-4 via the crossbar 100.

In the crossbar 100, input ports A to D are connected respectively to the nodes P-1 to P-4, which are processor nodes, and output ports W to Z are connected respectively to the nodes M-1 to M-4, which are memory module nodes.

In the crossbar 100, multi-step input queues are provided for each input port, the input queues are grouped into input queue groups, and one input queue group is assigned for each destination output port. The input data that is input into the input port is distributed to the input queue group according to its data transmission destination. This arrangement leads to increased throughput.

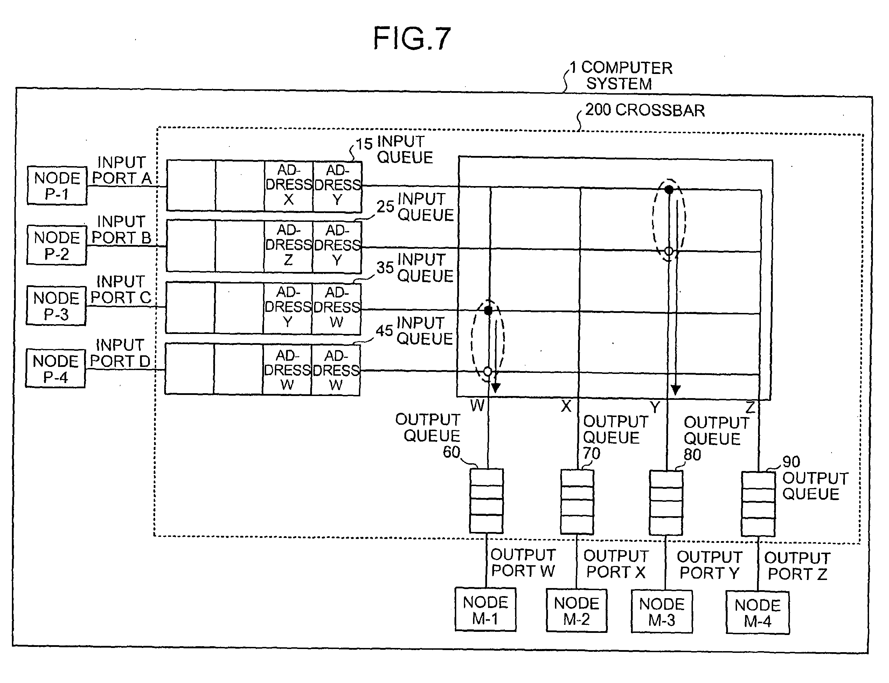

To help understanding of the characteristic feature of the present invention, the operation of a conventional crossbar will be explained first. Fig. 7 is a block diagram of a conventional crossbar 200. In the crossbar 200, the data packets stored in each input queue are queued and the data packet to be transmitted is extracted. Based on the routing channel of the extracted data packet, the node at the input end and the node at the output end are selected respectively from among the nodes P-1 to P-4, which are processor nodes, and the nodes M-1 to M-4, which are memory module nodes. The crossbar 200 then connects the input port and the output port connected to the nodes at the selected input end and output end to form a transmission channel (routing channel), and performs the data transmission process between the nodes through the data transmission channel.

Therefore, when there is a request from each processor (for instance, the nodes P-1, P-2, P-3, and P-4) to access a different memory module (for instance, the nodes M-1, M-2, M-3, and M-4), the data transmission process can be performed uninterrupted.

However, if the destination of the first data packet is busy, the subsequent data packets (second data packet onwards) are queued even though their destinations are not busy, leading to restricted throughput.

For instance, in Fig. 7, the transmission destination of the first data packet in an input queue 15 provided in an input port A and the first data packet in an input queue 25 provided in an input port B is "address Y (that is, node M-3)". Consequently, this results in a port conflict. Even when the transmission destinations of the subsequent data packets (second data packet onwards) are not busy, the subsequent data packets (second data packet onwards) remain queued until the port conflict is resolved, leading to throughput drop.

On the contrary, in the crossbar according to the embodiment of the present invention, multi-step input queues are provided for each input port, and the input queues are grouped into input queue groups, each input queue group being assigned to an output port, the output port representing the data transmission destination. This arrangement makes it possible to prevent the subsequent data packets from being queued due to the data transmission destination of the first packet being busy.

Concretely, in the crossbar 100, input queue groups 10, 20, 30, and 40 (not shown) are respectively provided in the input port A, the input port B, an input port C, and an input port D. The input queue group 10 has a stepped input queue 10a, in which the data packets whose data transmission destinations are "address W" and "address Y" are queued, and an input queue 10b, in which the data packets whose data transmission destinations are "address X" and "address Z" are queued. Similarly, the input queue group 20 has stepped input queues 20a and 20b, the input queue group 30 has stepped input queues 30a and 30b, and the input queue group 40 has stepped input queues 40a and 40b.

The crossbar 100 includes a distribution processor 110 that distributes the data packets input into the input port to the multi-step input queues provided for each input port. The distribution processor 110 distributes the data packets to the input queue group (that is, either the input queue 10a or the input queue 10b of the input queue group 10) according to the data transmission destination (that is, "address W" and "address Y" or "address X" and "address Z") of the data packets input into the input port (for instance, the input port A).

Thus, by providing multi-step input queues for each input port, grouping the input queues into input queue groups, assigning one input queue group to each output port, which represents the data transmission destination, and distributing the data input into the input port to the input queue group according to its data transmission destination, the number of input ports can be made more than the number of output ports.

Referring to Fig. 1, the data transmission destination of the first data packet of the input ports A and B is "address Y". Even if a port conflict occurs in input queues 10a and 20a, as the data transmission destination "address X" of the next data packet of the input port A and the "address Z" of the next data packet of the input port B are stored in the input queue 10b and the input queue 20b, even if the transmission destination of the first data packet is busy, the data transmission process of the next data packets can be performed uninterrupted.

Thus, instead of neglecting the problem that arises due to queuing of subsequent data packets in the conventional crossbar, in which one input queue is provided for each input port is given due attention and remedied by providing multi-step input queues for each input port, grouping the input queues into input queue groups, assigning one input queue group to each output port, which represents the data transmission destination, and distributing the data input into the input port to the input queue group according to its data transmission destination. Thus, even if the transmission destination of the first data packet is busy, the data transmission process of the subsequent data packets can be performed uninterrupted, thereby enhancing the throughput.

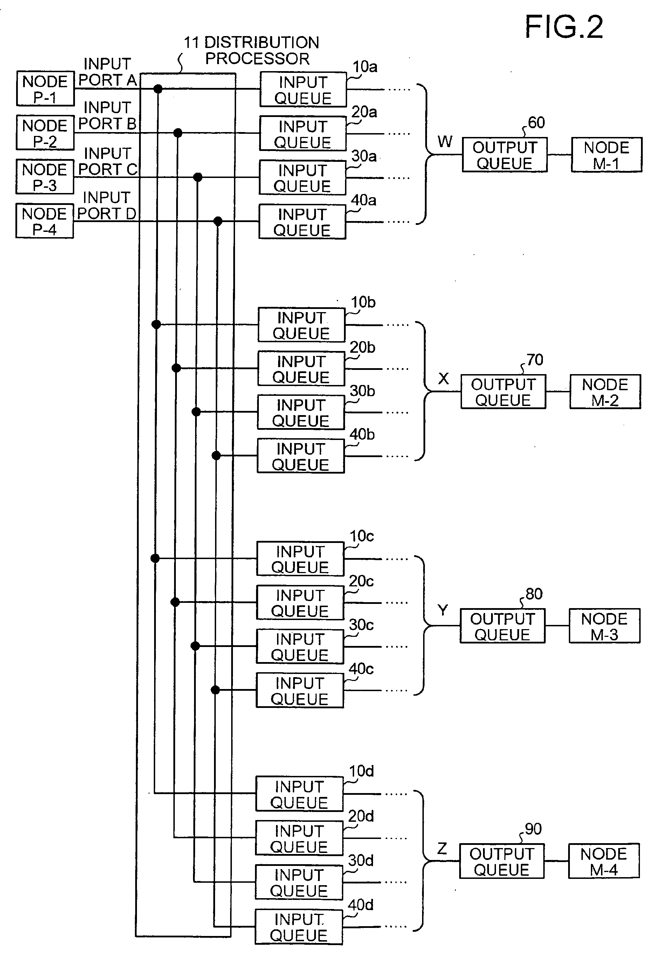

The data transmission destinations (that is, "address W", "address Y", "address X", and "address Z") have been classified into two groups, one group including "address W" and "address Y" and another group including "address X" and "address Z", and input queue groups with two-step input queues are shown as an example. As shown in Fig. 2, however, it is also permissible to have four separate data transmission destinations, namely, "address W", "address Y", "address X", and "address Z", and have input queue groups with four-step input queues, as shown in Fig. 2.

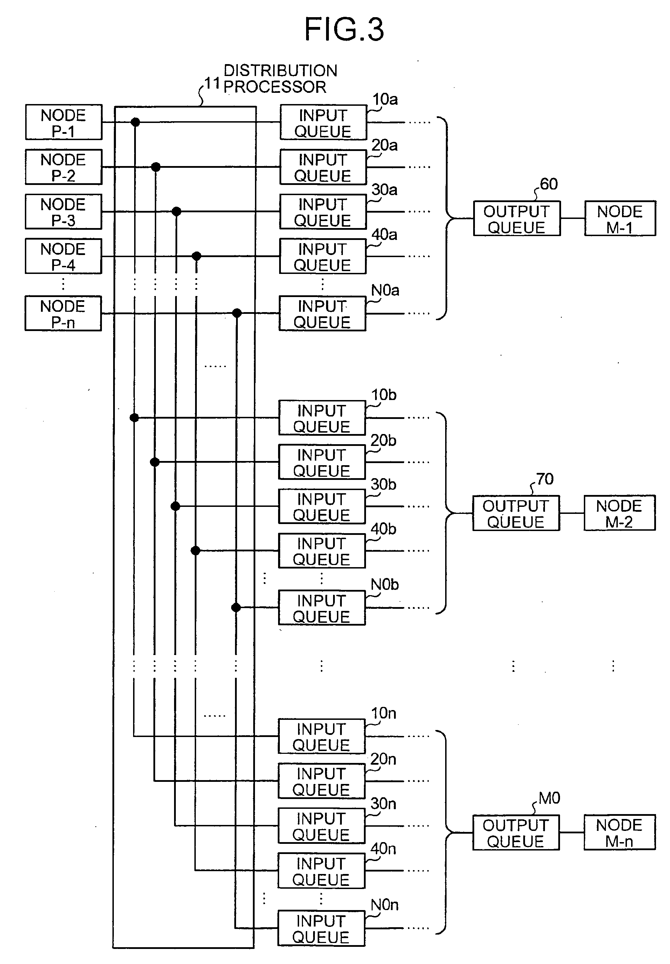

Furthermore, the crossbar is applied to a computer system having four nodes at the input end (namely, nodes P-1 to P-4, which are processor nodes) and four nodes at the output end (namely, nodes M-1 to M-4, which are memory module nodes). As shown in Fig. 3, however, the crossbar may be applied to any computer system having any number of nodes at the input end (that is, nodes P-1 to P-n) and the output end (that is, memory module nodes M-1 to M-n).

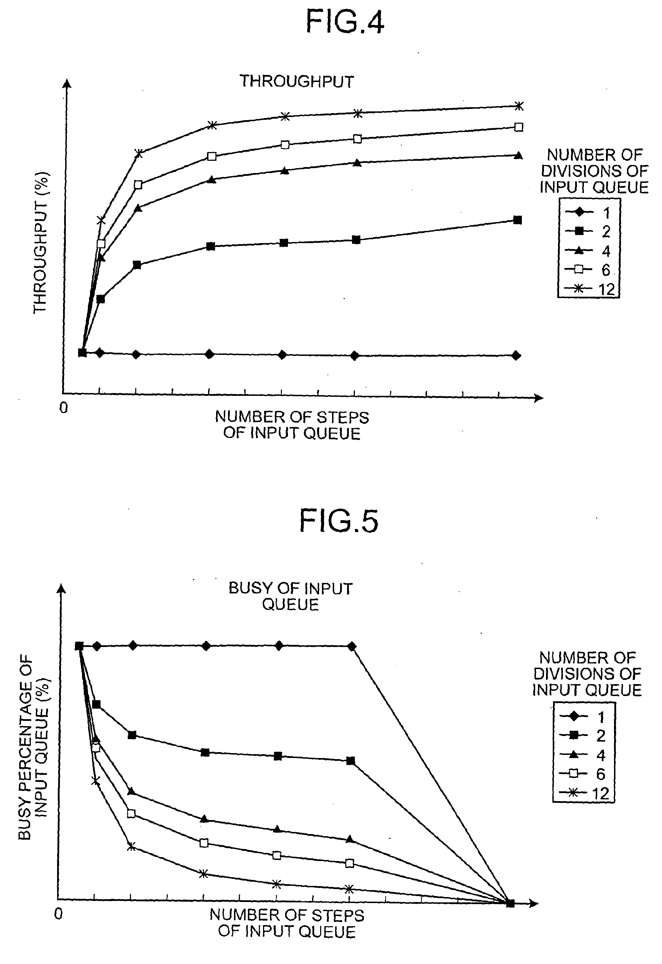

The advantages achieved from the crossbar according to the present invention are explained below with the help of simulation results (Fig. 4 and Fig. 5). Fig. 4 illustrates results obtained through a simulation of throughput. Fig. 5 illustrates results obtained through a simulation of busy rate. The simulation was performed under the following conditions:
(1) Number of input ports and output ports used: 12
(2) Packet signals are continuously sent to all the input ports at random (synchronization). The simulation result obtained after 10,000 cycles
(3) Input port ≠ output port
(4) When even one of the input queues corresponding to each input port fills to capacity, the input port is assumed to be busy and the input of the data packets from the busy input port is not received
(5) The number of steps of FIFO buffer of the output queue is infinite.

As shown in Fig. 4 and Fig. 5, the more the number of divisions of the input queue and the steps of the FIFO buffer of the input queue, the higher the throughput and the lower the busy rate. The simulation result indicates that when compared with the crossbar in which the number of divisions is "one" (that is, the conventional crossbar), the crossbar with a plurality of divisions (that is, the crossbar according to the present invention) has a remarkably higher throughput and a noticeably lower busy rate.

In other words, the simulation result indicates that there are many instances of the transmission destination of the subsequent data packets (second data packet onwards) not being busy when the transmission destination of the first data packets is busy, and that the effectiveness of the crossbar according to the present invention is therefore profound.

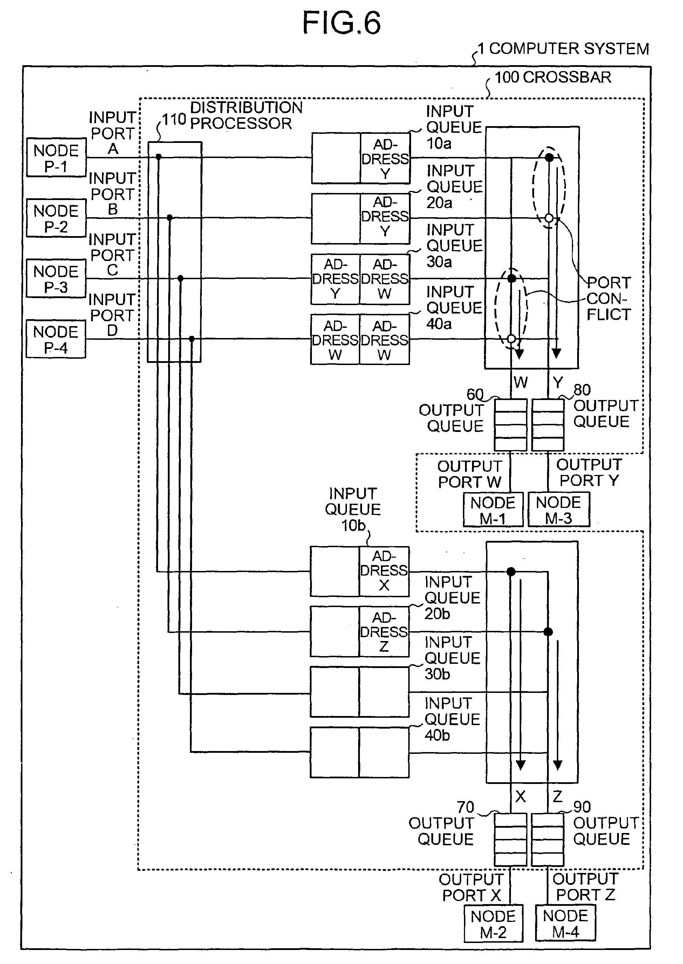

In the present invention, since the throughput is enhanced and the busy rate is reduced, the crossbar may be configured in such a way that there are fewer steps of the FIFO buffer of the input queue group compared to the number of steps of the FIFO buffer of the input queue of the conventional crossbar 200. For instance, in the crossbar 100 shown in Fig. 1, the number of steps of the FIFO buffer used in every input queue group (that is, the input queue groups 10, 20, 30, and 40) is the same (that is, four) as the number of steps of the FIFO buffer of the input queue of the conventional crossbar 200. However, in the crossbar 100 shown in Fig. 6, the number of steps of the FIFO buffer used in every input queue group is fewer (two, for instance) than the number of steps (four) of the FIFO buffer of the input queue of the conventional crossbar 200.

In other words, the throughput can be enhanced with the same number of pieces of hardware as the conventional crossbar. Further, the throughput can be enhanced with fewer pieces of hardware than the conventional crossbar by using fewer input queue groups with low frequency of data packet queuing or fewer steps of the FIFO buffer of the input queue.

All the automatic processes explained in the present embodiment can be, entirely or in part, carried out manually. On the other hand, all the manual processes explained in the present embodiment can be entirely or in part carried out automatically by a known method. The sequence of processes, the sequence of controls, specific names, and data including various parameters can be changed as required unless otherwise specified.

The constituent elements of the device illustrated are merely conceptual and may not necessarily physically resemble the structures shown in the drawings. For instance, the device need not necessarily have the structure that is illustrated. The device as a whole or in parts can be broken down or integrated either functionally or physically in accordance with the load or how the device is to be used.

According to the crossbar of the present invention, even if the transmission destination of the first data packet is busy, the data transmission process of the subsequent data packets can be performed without interruption. This leads to increased throughput.

Moreover, since the FIFO buffer can have fewer steps, an enhanced throughput can be realized with the same number of or fewer pieces of hardware than the conventional crossbar.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A crossbar that includes a plurality of input ports and output ports, comprising:
a plurality of input queue groups (10, 20, 30, 40), each input queue group is provided corresponding to each input port, each input queue group having an input queue (10a-10d, 20a-20d, 30a-30d, 40a-40d) corresponding to each output port, the output port being a data transmission destination; and
a distribution processing unit (110) that distributes input data input into the input port to any of the input queue groups (10, 20, 30, 40) according to the data transmission destination of the input data.

2. The crossbar according to claim 1, wherein each of the input queue groups (10, 20, 30, 40) has fewer steps of a FIFO buffer than those of the FIFO buffer of a conventional input queue.
